# EUROPEAN PATENT SPECIFICATION

(11) **EP 3 533 310 B1**
(45) Date of publication and mention of the grant of the patent: **01.07.2020**
(21) Application number: 18159061.3
(22) Date of filing: 28.02.2018
(51) Int. Cl.: A01D 34/00, G05D 1/02, A01D 34/74

(54) **LAWN GROUND MANAGEMENT SYSTEM**
RASENFLÄCHENMANAGEMENTSYSTEM
SYSTÈME DE GESTION DE TERRAIN DE PELOUSE

(43) Date of publication of application: 04.09.2019
(73) Proprietor: HONDA MOTOR CO., LTD., Tokyo 107-8556 (JP)
(72) Inventor: Borsdorf, Ronny, 63073 Offenbach am Main (DE); Einecke, Nils, 63073 Offenbach am Main (DE); Staar, Niels, 63073 Offenbach am Main (DE)
(74) Representative: Beder, Jens

(56) References cited:
- EP-A2- 2 960 100
- CN-A- 103 823 464
- DE-U1-202012 104 646
- JP-B2- 5 920 743
- US-A- 4 286 444
- US-A1- 2016 109 241

## Description

The present invention relates to a lawn ground management system including an autonomous work vehicle for performing a mowing operation by a work unit while autonomously traveling in a work area and a charging station for supplying power to the autonomous work vehicle.

European Patent Application Publication No. EP2894532 discloses a system including a base station and an autonomous robot device having an arrangement for cleaning a camera sensor.

U.S. Patent No. 7614207 discloses an arrangement for holding a lawn mower during transportation. Documents EP 2 960 100 A2 and DE 20 2012 104646 U1 describe known lawn ground management systems with mowers are attachable to a charging station.

However, in the above patent literatures, an efficient anti-theft arrangement for locking an autonomous work vehicle to a charging station is not disclosed.

The present invention has been made in consideration of the above problem and provides an anti-theft lawn ground management system capable of locking an autonomous work vehicle to a charging station.

The present invention provides a lawn ground management system as specified in claims 1 to 9.

According to the present invention, it is possible to lock the autonomous work vehicle to the charging station for anti-theft performance.
Fig. 1 is a view showing the arrangement of an autonomous work vehicle (work vehicle) according to the first embodiment;
Fig. 2 is a block diagram showing the relationship between the inputs and outputs of an electronic control unit (ECU) for controlling a work vehicle;
Fig. 3 is a block diagram showing the electrical arrangement of a charging station (charging ST);
Fig. 4 is a view showing the schematic outer appearance of the charging ST;
Fig. 5 shows views for explaining the arrangement of a locking member;
Fig. 6 shows views showing states in which the work vehicle of the first embodiment returns to the charging position of the charging ST;
Fig. 7 is a view showing the arrangement of a work vehicle according to the second embodiment;
Fig. 8 is a block diagram showing the electrical arrangement of the charging ST according to the second embodiment;
Fig. 9 is a view showing the schematic outer appearance of the charging ST according to the second embodiment
Fig. 10 is a view showing a state in which the work vehicle according to the second embodiment returns to the charging position of the charging ST;
Fig. 11 is a view exemplifying a state in which a locking pin holding member holds a locking pin;
Fig. 12 shows views showing a state in which a work vehicle according to the third embodiment returns to the charging position of a charging ST;
Fig. 13 is a view exemplifying the schematic arrangement of a cover member and a lid member which cover the work vehicle;
Fig. 14 is a block diagram showing the electrical arrangement of the charging ST according to the third embodiment;
Fig. 15 shows views for explaining a wheel locking mechanism arranged in the charging ST;
Fig. 16 is a block diagram showing the electrical arrangement of a charging ST according to the fourth embodiment; and
Fig. 17 is a flowchart showing the processing sequence of each ECU according to the fifth embodiment.

An embodiment of a lawn ground management system according to the present invention will be exemplified with reference to the accompanying drawings. The lawn ground management system includes an autonomous work vehicle for performing a mowing operation by a work unit while autonomously traveling in a work area, and a charging station for supplying power to the autonomous work vehicle. The work unit for performing the mowing operation includes, for example, a mowing blade (rotary blade), an electric motor for rotating and driving the blade, a blade height adjustment motor for adjusting the height of the blade, a sensor for detecting the height of the blade, and the like.

The constituent elements described in the following embodiment are merely examples. The technical scope of the present invention is defined by the scope of the appended claims and is not limited by the individual embodiments to be described below.

### First Embodiment

A lawn ground management system includes an anti-theft locking portion for locking an autonomous work vehicle to a charging station in a state in which the autonomous work vehicle is located at a charging position to receive the power supply from the charging station.

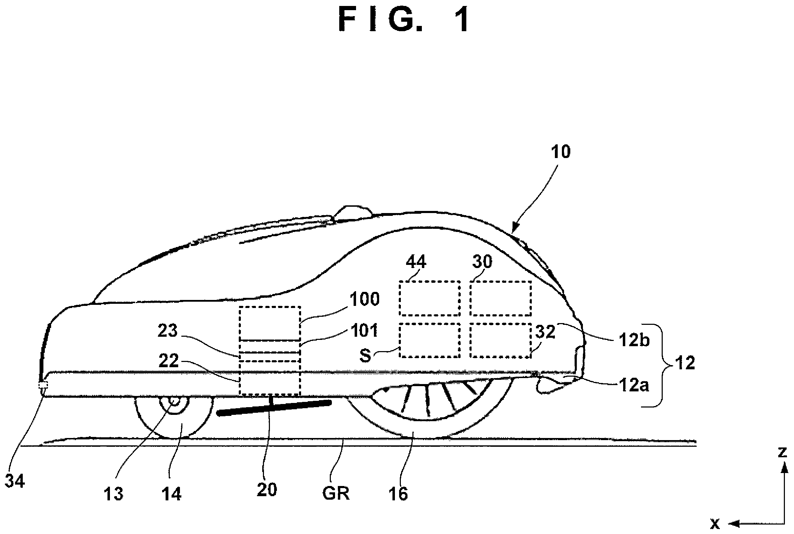

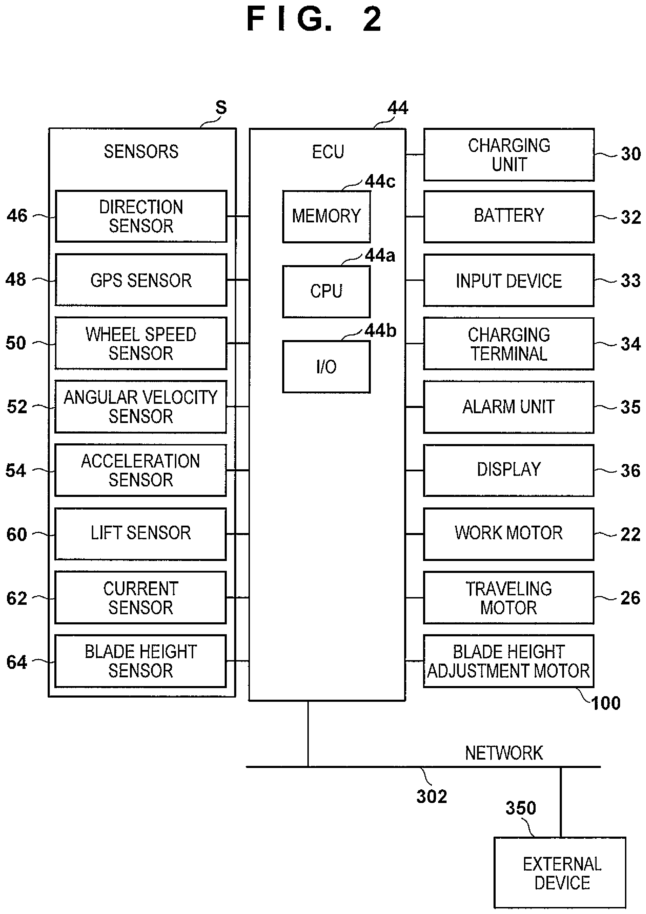

Fig. 1 is a view showing the arrangement of an autonomous work vehicle according to the first embodiment. Fig. 2 is a block diagram showing the relationship between the inputs and outputs of an electronic control unit (ECU) for controlling the autonomous work vehicle. In the following description, a traveling direction (vehicle longitudinal direction) of the autonomous work vehicle when viewed from the side, a lateral direction (vehicle width direction) perpendicular to the traveling direction, and a vertical direction perpendicular to the traveling direction and the lateral direction are defined as a front-and-rear direction, a right-and-left direction, and a vertical direction, respectively. The arrangements of the respective components will be described in accordance with the above definitions.

Reference numeral 10 in Fig. 1 denotes an autonomous work vehicle (to be referred to as a work vehicle hereinafter). The work vehicle 10 practically functions as an autonomous lawn mower. A vehicle body 12 of the work vehicle 10 includes a chassis 12a and a frame 12b attached to the chassis 12a.

The work vehicle 10 includes two small-diameter left and right front wheels 14 fixed to the front side of the chassis 12a via a stay 13 in the front-and-rear direction. The work vehicle 10 also includes large-diameter left and right rear wheels 16 attached to the chassis 12a in the rear side.

A mowing operation blade (rotary blade) 20 is attached near the central position of the chassis 12a of the work vehicle 10. An electric motor (to be referred to as a work motor hereinafter) 22 is arranged above the blade 20. The blade 20 is connected to the work motor 22 and rotated and driven by the work motor 22.

A motor holding member 23 holds the work motor 22. The motor holding member 23 is restricted to rotate with respect chassis 12a and is allowed to move vertically by a combination of, for example, a guide rail and a slider vertically movable by being guided along the guide rail.

A blade height adjustment motor 100 for adjusting the height of the blade 20 in the vertical direction with respect to a ground surface GR is arranged in the work vehicle 10. A translation mechanism 101 for converting the rotation of the height adjustment motor 100 into the translation in the vertical direction is connected to the blade height adjustment motor (to be referred to as a height adjustment motor hereinafter) 100. A motor holding member 23 for holding the work motor 22 is connected to the translation mechanism 101.

The translation mechanism 101 converts the rotation of the height adjustment motor 100 into the translation (movement in the vertical direction), and the translation is transmitted to the motor holding member 23. The work motor 22 held by the motor holding member 23 is translated (movement in the vertical direction) by the translation (movement in the vertical direction) of the motor holding member 23. By the movement of the work motor 22 in the vertical direction, the height of the blade 20 with respect to the ground surface GR can be adjusted.

Two electric motors (motors; to be referred to as traveling motors hereinafter) 26 are attached to the chassis 12a of the work vehicle 10 (Fig. 2). The traveling motors 26 are connected to the left and right rear wheels 16, respectively. The front wheels 14 serve as driven wheels, and the rear wheels 16 serve as the driving wheels. The right wheels and the left wheels are independently rotated in the forward direction (rotation in the forward direction) or in the reverse direction (rotation in the reverse direction), thereby moving the work vehicle 10 in a variety of directions. An ECU 44, various types of sensors S, a charging unit 30, and a battery 32 to control the operations of the blade 20, the work motor 22, the traveling motors 26, the height adjustment motor 100, and the work vehicle 10 are covered by the frame 12b.

The charging unit 30 and the battery 32 are mounted in the work vehicle 10. A charging terminal 34 is provided at the front end position of the frame 12b in the front-and-rear direction. The charging terminal 34 is connected to the charging unit 30 via a cable, and the charging unit 30 is connected to the battery 32. The work motor 22, the traveling motors 26, and the height adjustment motor 100 are connected to the battery 32 and are powered from the battery 32.

The electronic control unit (control device; Electronic Control Unit; to be referred to as an ECU hereinafter) 44 formed from a microcomputer provided on a circuit board is mounted in the work vehicle 10. As shown in Fig. 2, the ECU 44 includes a CPU 44a, an I/O 44b, and a memory (ROM, EEPROM, or RAM) 44c. The memory 44c stores information on the work schedule of the work vehicle 10, various kinds of programs for controlling the operation of the work vehicle 10, and a PIN code as authentication information for authenticating an authentic user.

In a state in which the autonomous work vehicle is locked to the charging station for anti-theft performance, the ECU 44 controls the locked state release or continuation based on the inputs of the preset work schedule of the work vehicle or the authentication information (PIN code). For example, the ECU 44 manages the next work schedule execution start timing stored in the internal memory and releases the locked state at the next work schedule execution start timing. Alternatively, if the next work schedule execution start timing is not set, but the correct authentication information (PIN code) is input, the ECU 44 can release the locked state. The ECU 44 determines whether the authentication information (PIN code) stored in the memory 44c matches the PIN code input from an input device or the like. If the PIN codes match, the ECU 44 determines the input from the authentic user. The ECU 44 releases the locked state for anti-theft performance to be described below and sets the work vehicle 10 in a workable state.

As sensors for obtaining position information of the work vehicle 10, for example, a direction sensor 46 for detecting the direction corresponding to the terrestrial magnetism and a GPS sensor 48 for detecting information indicating the current position (latitude and longitude) of the work vehicle 10 upon reception of radio waves from a GPS satellite are connected to the ECU 44.

As sensors for obtaining information on the moving state of the work vehicle 10, for example, a wheel speed sensor 50 for detecting the wheel speeds of the left and right rear wheels 16, an angular velocity sensor 52 for detecting an angular velocity around a vertical axis (the z-axis in the vertical direction) of the barycentric position of the work vehicle 10, and an acceleration sensor 54 for detecting accelerations in the orthogonal three axes, that is, x-, y-, and z-axes acting on the work vehicle 10 are connected to the ECU 44.

A lift sensor 60 for outputting an ON signal when the work vehicle 10 is lifted is connected to the work vehicle 10. The work vehicle 10 is protected by the authentication information (PIN code). The ECU 44 can determine based on the authentication information (PIN code) whether the user is an authentic user of the work vehicle 10. If the correct authentication information (PIN code) is not input and the work vehicle 10 is lifted, the lift sensor 60 outputs the ON signal. When the lift sensor 60 outputs the ON signal, the ECU 44 controls an alarm unit 35 until the authentication information is input. The alarm unit 35 generates a beep sound as an anti-theft alarm sound of the work vehicle 10.

A current sensor 62 for detecting current consumption (power consumption) of the mounted battery 32 is connected to the ECU 44. The detection result of the current consumption (power consumption) is stored in the memory 44c of the ECU 44. If a predetermined current is consumed and the power accumulated in the battery 32 is equal to or smaller than a threshold, the ECU 44 controls so that the work vehicle 10 returns to a charging station (charging ST) 200 for charging. The arrangement of the charging station 200 (charging ST) will be described later.

A blade height sensor 64 for detecting the height of the blade 20 with respect to the ground surface GR, that is, the height of the blade 20 with respect to the frame 12b is provided in the work vehicle 10. The detection result of the blade height sensor 64 is input to the ECU 44. When the height adjustment motor 100 is driven based on the control of the ECU 44, the blade 20 is vertically moved to adjust the height from the ground surface GR.

As an arrangement for inputting a user command to the frame 12b of the work vehicle 10, for example, an input device 33 such as a touch panel and a display 36 are arranged. The user can input authentication information (PIN code) from the input device 33. The input device 33 and the display 36 are connected to the ECU 44. Various kinds of information such as the work mode and setting information of the work vehicle 10 can be displayed on the display 36 in accordance with a command from the ECU 44.

As shown in Fig. 2, outputs from the various types of sensors S are sent to the ECU 44 and input via the I/O 44b. The ECU 44 supplies power from the battery 32 to the traveling motors 26, the work motor 22, and the height adjustment motor 100 based on the outputs from the various types of sensors S. The ECU 44 controls traveling of the work vehicle 10 by outputting a control value via the I/O 44b and controlling the operations of the traveling motors 26, adjusts the height of the blade 20 by controlling the height adjustment motor 100, and controls rotation of the blade 20 by controlling the work motor 22. In this case, the I/O 44b functions as a communication interface and can be connected to an external communication device (for example, a smartphone) 350 via a network 302. For example, the user can input authentication information (PIN code) from the communication device 350.

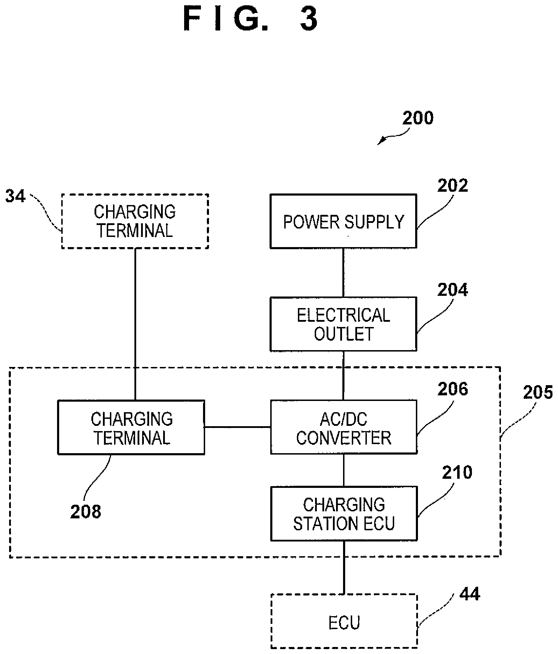

Fig. 3 is a block diagram showing the electrical arrangement of the charging station (charging ST) 200. As shown in Fig. 3, the charging ST 200 includes a charger (charging stand) 205 connected to a power supply 202 via an electrical outlet 204.

The charger 205 includes an AC/DC converter 206, a charging terminal 208, and a charging station ECU (Electronic Control Unit) 210 formed from a microcomputer for controlling the operation of the AC/DC converter 206. As in the ECU 44 described with reference to Fig. 2, the charging station ECU (Electronic Control Unit) 210 includes a CPU, an I/O, and a memory (ROM, EEPROM, or RAM). Information on the work schedule of the work vehicle 10 and a PIN code about a user are stored in the memory of the charging station ECU 210.

In a state in which the autonomous work vehicle is locked to the charging station for anti-theft performance, the charging station ECU 210 can control release or continuation of the locked state based on the input of the preset work schedule of the work vehicle or the authentication information (PIN code).

For example, the charging station ECU 210 manages the next work schedule execution start timing stored in the internal memory and releases the locked state at the next work schedule execution start timing. Alternatively, if the next work schedule execution start timing is not set, but the correct authentication information (PIN code) is input, the charging station ECU 210 can release the locked state.

When the work vehicle 10 returns to the charging position connected to the charger 205 (charging terminal 208) of the charging ST 200, the charging terminal 208 of the charging ST 200 is connected to the charging terminal 34 of the work vehicle 10. The conversion operation by the AC/DC converter 206 is started based on the control of the charging station ECU (Electronic Control Unit) 210. Upon detecting the start of the converting operation by the AC/DC converter 206, the charging station ECU 210 communicates with the ECU 44 of the work vehicle 10 to transmit a locking instruction, thereby starting the locking operation. Based on the reception of the locking instruction, the ECU 44 of the work vehicle 10 controls the operation of the blade height adjustment motor 100 and the position of the blade 20, thereby performing the locking operation. The detailed contents of the locking operation will be described later.

An AC voltage sent from the power supply 202 to the electrical outlet 204 in the charging ST 200 is transformed into a DC voltage in the AC/DC converter 206 of the charger 205. The DC voltage is supplied to the charging terminal 208. When the work vehicle 10 returned to the charging ST 200 is connected (docked) to the charging terminal 208 of the charging ST 200 via the charging terminal 34, the battery 32 of the work vehicle 10 is charged with the voltage supplied via the charging terminal 208 and the charging terminal 34.

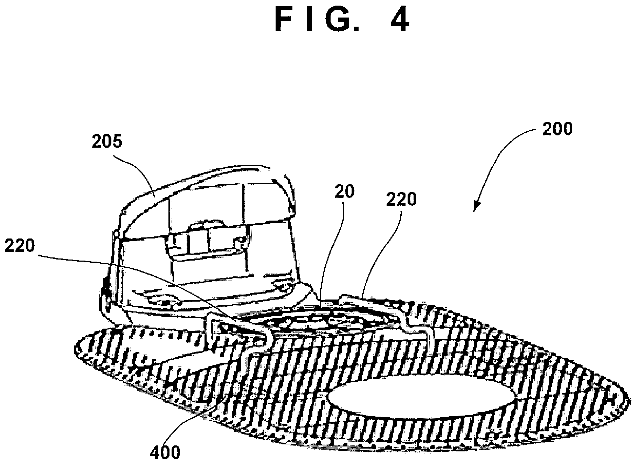

Fig. 4 is a view showing the schematic outer appearance of the charging ST 200. Referring to Fig. 4, the arrangement of the charger 205 is shown in the block diagram of Fig. 3. The blade 20 of the work vehicle 10 is locked and a locking member 220 for locking the work vehicle 10 to the charging ST 200 for anti-theft performance is fixed to a base surface 400 of the charging ST 200. Referring to Fig. 4, the blade 20 shows that the position of the blade 20 is supplementarily shown when the work vehicle 10 returns to the charging position connected to the charger 205 of the charging ST 200.

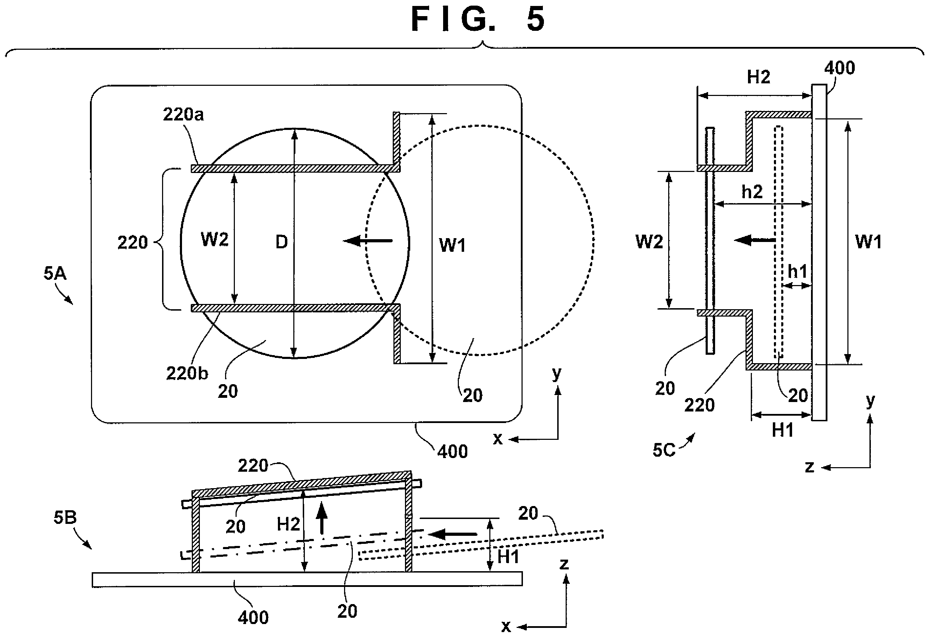

Fig. 5 shows views for explaining the arrangement of the locking member 220. For the descriptive convenience, the arrangement of the charger 205 is not illustrated. 5A of Fig. 5 shows the arrangement of the x-y plane of the base surface 400 of the charging ST 200. 5B of Fig. 5 shows the arrangement of the x-z plane of the base surface 400. 5C of Fig. 5 shows the arrangement of the y-z plane of the base surface 400. The locking member is formed from two portions (members 220a and 220b), respectively, having a first member interval W1 through which the blade 20 passes when the autonomous work vehicle returns from the work area to the charging station, and a second member interval W2 through which the blade does not pass in a state in which the autonomous work vehicle is located at the charging position.

In 5A of Fig. 5, the blade 20 indicated by the broken line indicates the position of the blade 20 during which the work vehicle 10 returns to the charging ST 200. Based on the control of the ECU 440, the work vehicle 10 travels in a direction indicated by an arrow and returns to the charging position where the charging terminal 34 of the work vehicle 10 is connected to the charger 205 (charging terminal 208) of the charging ST 200. In 5A of Fig. 5, the blade 20 indicated by a solid line indicates the position of the blade 20 in a state in which the work vehicle 10 returns to the charging position.

The members 220a and 220b have the member interval W1 at the fixed ends of the end portions and the member interval W2 smaller than the member interval W1 at the parallel portions of the members. Letting D be the diameter of the blade 20, the relationship between the member intervals W1 and W2, and D satisfies W1 > D > W2.

As shown in 5B and 5C of Fig. 5, as the height of the members 220a and 220b with respect to the base surface 400, the members 220a and 220b have a member height HI at the fixed ends of the end portions and a member height H2 higher than the member height HI at the parallel portions of the members. Note that in 5B and 5C of Fig. 5, the member height H2 indicates a representative height of the members corresponding to the central portion of the blade 20 returned to the charging position.

In 5B and 5C of Fig. 5, the blade 20 indicated by the broken line indicates the position of the blade 20 while the work vehicle 10 is returning to the charging ST 200. In 5B of Fig. 5, the blade 20 indicated by an alternate long and short dashed line indicates the position of the blade 20 in a state in which the work vehicle 10 has returned to the charging position.

The work vehicle 10 includes the blade height sensor 64 for detecting the height of the blade 20 with respect to the ground surface GR, the height adjustment motor 100 serving as an adjustment unit for adjusting the height of the blade 20, and the ECU 44 serving as a control unit for controlling the height of the blade 20 by the height adjustment motor 100 based on the detection result of the blade height sensor 64.

The ECU 44 controls the blade 20 to the first height (for example, a height h1 lower than HI in 5C of Fig. 5) when the blade 20 passes between the members (220a and 220b) having the first member interval W1 of the locking members 220a and 220b. The ECU 44 moves the blade 20 upward to the second height (for example, a height h2 higher than HI in 5C of Fig. 5 but lower than H2) higher than the first height h1 by controlling the height adjustment motor 100 in order to make the blade 20 come close to the members 220a and 220b arranged at the second member interval W2 in the state in which the work vehicle 10 is located at the charging position. This makes it possible to lock the blade 20 to the locking member 220.

More specifically, the ECU 44 controls driving of the height adjustment motor 100 so as to make the blade 20 pass through the ends of the members (220a and 220b) at the first member interval W1 and the member height HI while the work vehicle 10 is returning to the charging ST 200, thereby performing the height adjustment (height position control of the blade 20) of the blade 20 with respect to the base surface 400. For example, the ECU 44 can perform height position control for controlling the height to match the lowest height h1 among the adjustable heights by the height adjustment motor 100.

In a state in which the work vehicle 10 has returned to the charging position, the ECU 44 controls driving of the height adjustment motor 100 so as to move the blade 20 upward to come close to the members 220a and 220b arranged at the second member interval W2 (5B of Fig. 5). For example, the ECU 44 can perform height position control for controlling the height to match the highest height h2 among the adjustable heights by the height adjustment motor 100.

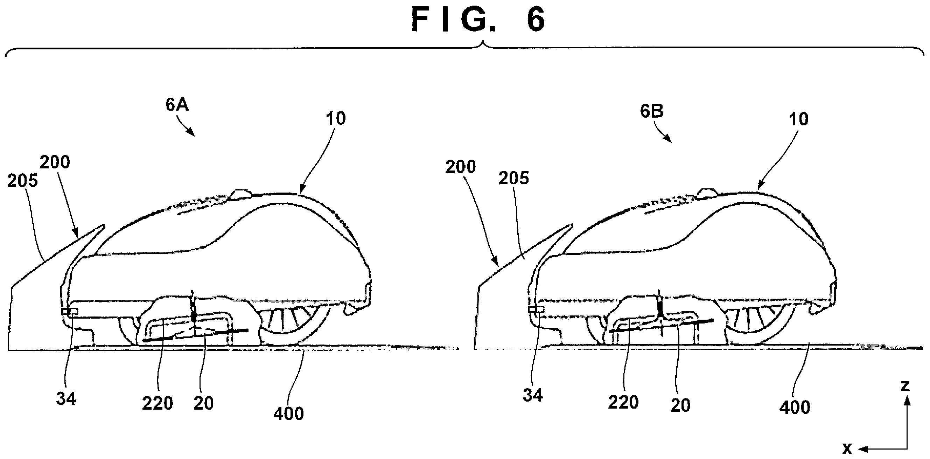

Fig. 6 shows views of a state in which the work vehicle 10 has returned to the charging position of the charging ST 200. In 6A of Fig. 6, the height of the blade 20 corresponds to a state of the blade 20 indicated by the alternate long and short dashed line in 5B of Fig. 5 (the height of the blade 20 is h1).

In the state indicated by 6A of Fig. 6, the ECU 44 controls driving of the height adjustment motor 100 so as to move the blade 20 upward to the height h2 to make the blade 20 come close to the members 220a and 220b arranged at the second member interval W2 as shown in 5A and 5B of Fig. 5. More specifically, the ECU 44 controls driving of the height adjustment motor 100 so as to increase the blade 20 to the highest mowing height. In 6B of Fig. 6, the height of the blade 20 corresponds to the height of the blade 20 indicated by the solid line in 5B and 5C of Fig. 5.

Since the charging ST 200 is fixed on the ground by an earth screw to which an earth terminal connected to an earth cable is attached, it is difficult to lift the charging ST 200. That is, it is difficult to remove the earth screw in a state in which the work vehicle 10 is located on the charging ST 200. In a state in which the blade 20 is lifted to the highest mowing height, the movement of the work vehicle 10 in the front-and-rear direction, the vertical direction, and the right-and-left direction is restricted because the member interval W2 of the locking members 220a and 220b is narrow due to the diameter D of the blade 20. That is, the work vehicle 10 is locked on the charging ST 200.

To release the locked state, the blade 20 must be moved downward to a position (for example, the height h1) lower than the height HI (5C of Fig. 5). Until the next work schedule execution start timing or the correct authentication information (PIN code) is input, the ECU 44 maintains the locked state.

If the input of the correct authentication information (PIN code) is confirmed, the ECU 44 controls driving of the height adjustment motor 100 to move the blade 20 downward from the second height h2 shown in 5C of Fig. 5 to the first height h1, thereby releasing locking of the lock members 220. Alternatively, the ECU 44 moves the blade 20 downward from the second height h2 to the first height h1 at the work schedule execution start timing, thereby releasing locking of the lock member.

According to this embodiment, the anti-theft function can be improved by the physical locking between the work vehicle 10 and the charging ST 200. That is, the autonomous work vehicle can be locked to the charging station for anti-theft performance.

### Second Embodiment

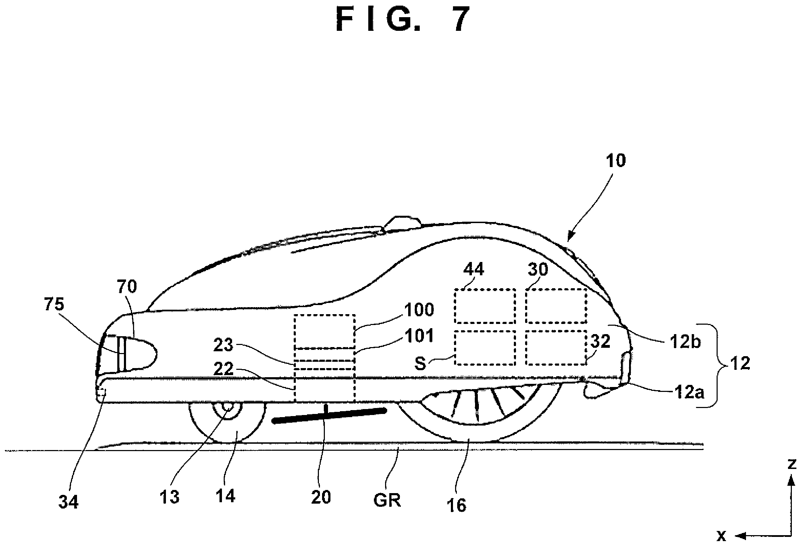

The arrangement of the second embodiment of the present invention will be described with reference to Figs. 7 to 11. In this embodiment, as the arrangement of the locking portion, an arrangement including a locking pin 75 provided at the front end portion of a work vehicle 10, and a locking pin holding member 230 provided in a charging station 200 to hold the locking pin 75 in a state in which the work vehicle 10 is located at the charging position will be described below.

Fig. 7 is a view showing the arrangement of the work vehicle 10 according to the second embodiment. The components as in the work vehicle 10 described in the first embodiment denote the same parts in the second embodiment, and a description thereof will be omitted. In the work vehicle 10 according to this embodiment, a recess 70 is formed at the front end portion. The locking pin 75 is arranged in the recess 70.

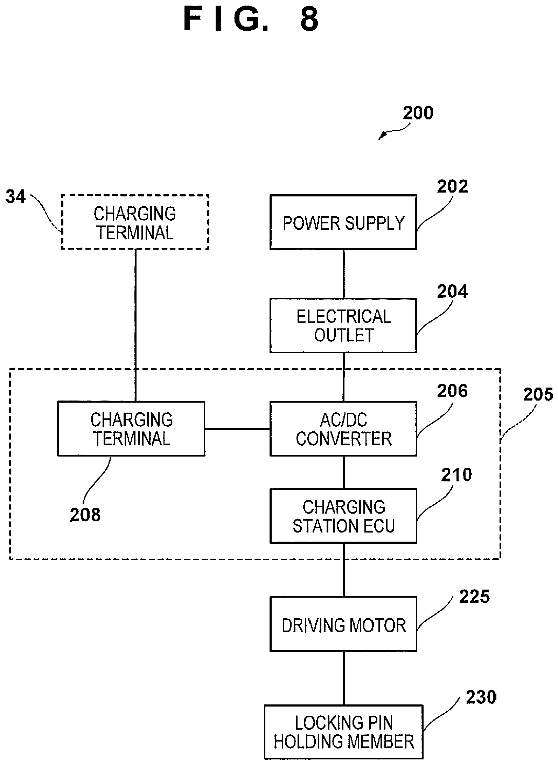

Fig. 8 is a block diagram showing the electrical arrangement of the charging station (ST) 200 according to the second embodiment. As shown in Fig. 8, the charging ST 200 includes a charger 205 connected to a power supply 202 via an electrical outlet 204.

The charger 205 includes an AC/DC converter 206, a charging terminal 208, and a charging station ECU (Electronic Control Unit) 210 for controlling the operation of the AC/DC converter 206. When the work vehicle 10 returns to the charging position connected to the charger 205 (charging terminal 208) of the charging station 200, the charging terminal 208 of the charging ST 200 is connected to a charging terminal 34 of the work vehicle 10. The AC/DC converter 206 starts the conversion operation based on the control of the charging station ECU 210.

Upon detecting the start of the conversion operation of the AC/DC converter 206, the charging station ECU 210 controls driving of a driving motor 225 to operate the locking pin holding member 230 for locking the work vehicle 10 to the charging ST 200 for anti-theft performance.

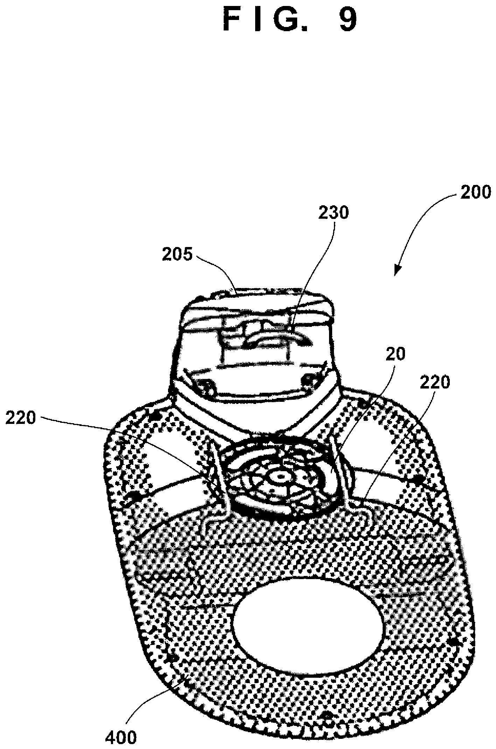

Fig. 9 is a view showing the schematic outer appearance of the charging ST 200 according to the second embodiment. Referring to Fig. 9, the arrangement of the charger 205 is the same as that shown in the block diagram of Fig. 8. A locking member 220 described with reference to the first embodiment is fixed to a base surface 400 of the charging ST 200. A blade 20 supplementarily indicates the position of the blade 20 when the work vehicle 10 returns to the charging position.

Referring to Fig. 9, the locking pin holding member 230 is formed from two pawl members capable of being opened/closed by the driving motor 225. For example, one pawl member performs the opening/closing operation in one direction based on rotation and driving of the driving motor 225. For example, the other pawl member performs the opening/closing operation when the rotation direction of the driving motor 225 is reversed via gears. When one pawl member performs the closing operation in the clockwise direction, the other pawl member performs the closing operation in the counterclockwise direction. Similarly, for example, when one pawl member performs the opening operation in the counterclockwise direction, the other pawl member performs the opening operation in the clockwise direction. Note that the opening/closing operation of the locking pin holding member 230 is not limited to this. For example, the two pawl members may be opened/closed using the biasing force of an elastic member such as a spring, or various mechanisms for transmitting rotation of a motor may be used.

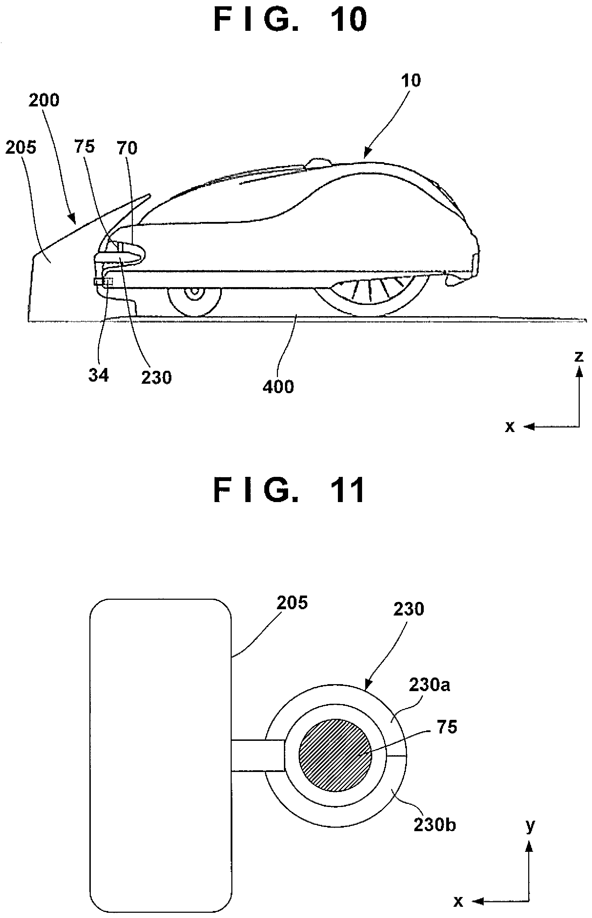

Fig. 10 is a view showing a state in which the work vehicle 10 has returned to the charging position of the charging ST 200. Referring to Fig. 10, the internal arrangements of the blade 20 and the work vehicle 10 are not illustrated for descriptive convenience. In a state in which the work vehicle 10 has returned to the charging ST 200, when the locking pin holding member 230 is set in a closed state by rotation and driving of the driving motor 225, the locking pin 75 provided at the front end portion of the work vehicle 10 is held by the locking pin holding member 230.

Fig. 11 is a view illustrating a state in which the locking pin holding member 230 holds the locking pin 75. The locking pin holding member 230 is formed from two members 230a and 230b openable by the driving motor 225. When one member 230a performs the closing operation in the clockwise direction, the other member 230b performs the closing operation in the counterclockwise direction. In a state in which the locking pin holding member 230 is kept closed, an annular closed region shown in Fig. 11 is formed, and the locking pin 75 is held in this region, thereby locking the work vehicle 10 to the charging ST 200.

When one member 230a performs the opening operation in the counterclockwise direction, the other member 230b performs the opening operation in the clockwise direction. By this opening operation, the locking pin holding member 230 is set in an open state (Fig. 9), thereby releasing locking.

To release locking, the members 230a and 230b must be opened such that the locking pin holding member 230 in the closed state shown in Fig. 11 is opened. Until the next work schedule execution start timing or the correct authentication information (PIN code) is input, the charging station ECU 210 maintains the locked state (closed state).

The charging station ECU 210 can be connected to an external communication device (for example, a smartphone) 350 via an I/O and a network 302 functioning as a communication interface. For example, the user can input the authentication information (PIN code) from the communication device 350. If the input of the correct authentication information (PIN code) is confirmed, the ECU 44 controls driving of the driving motor 225 to open the members 230a and 230b, thereby releasing the locked state. According to this embodiment, the anti-theft function can be improved by the physical locking between the work vehicle 10 and the charging ST 200. That is, the autonomous work vehicle can be locked to the charging station for anti-theft performance.

### Third Embodiment

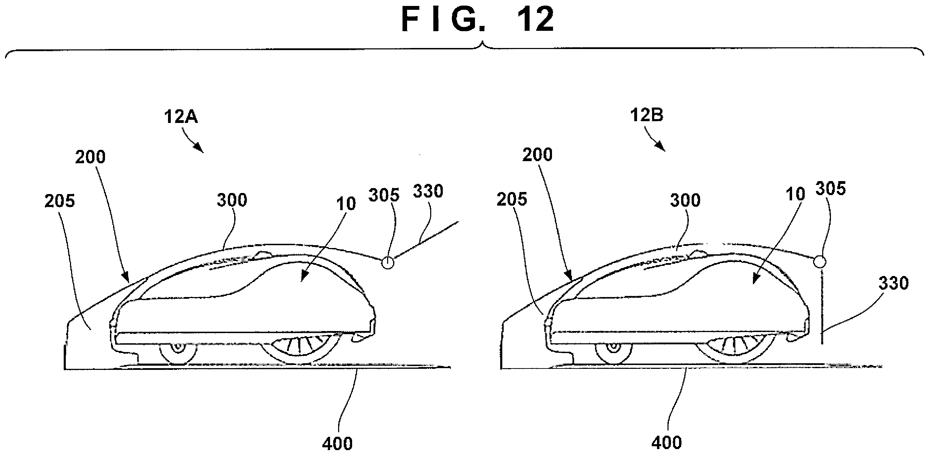

The arrangement of the third embodiment of the present invention will now be described with reference to Figs. 12 to 14. In this embodiment, as the arrangement of a locking portion, an arrangement of the charging station 200 which includes a cover member 300 which covers at least the upper portion of the work vehicle 10 and a lid member 330 provided rotatable with respect to the cover member 300 to cover the rear portion of the work vehicle 10 in a state in which a work vehicle 10 is located at the charging operation will be described below.

Fig. 12 shows views of a state in which the work vehicle 10 has returned to the charging position of the charging ST 200. The internal arrangements of a blade 20 and the work vehicle 10 will not be illustrated for descriptive convenience. The cover member 300 which covers at least the upper portion of the work vehicle 10 is provided in the charging ST 200. The lid member 330 is supported at the end portion of the cover member 300 via a hinge 305. 12A of Fig. 12 indicates an open state of the lid member 330, and 12B of Fig. 12 indicates the closed state of the lid member 330.

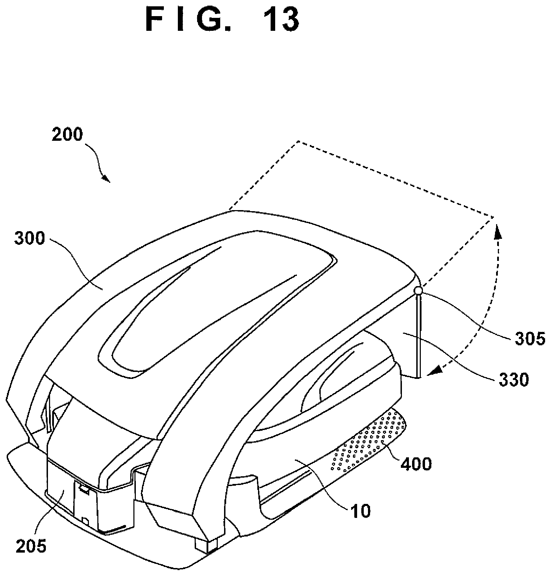

Fig. 13 is a view exemplifying the outline of the cover member 300 and the lid member 330 which cover the work vehicle 10. In this embodiment, the charging ST 200 includes the cover member 300 which covers at least the upper portion of the work vehicle 10. The arrangement of the cover member 300 is not limited to this. The cover member is arranged to cover the upper portion and right and left portions of the work vehicle 10. The lid member 330 rotatably supported by the hinge 305 is provided at the end portion of the cover member 300. The lid member 330 can be formed from a platelike or rod-like member. A driving motor is provided for the hinge 305 to open/close the lid member 330, and the lid member 330 is opened/closed along a track indicated by a broken line by driving of a driving motor.

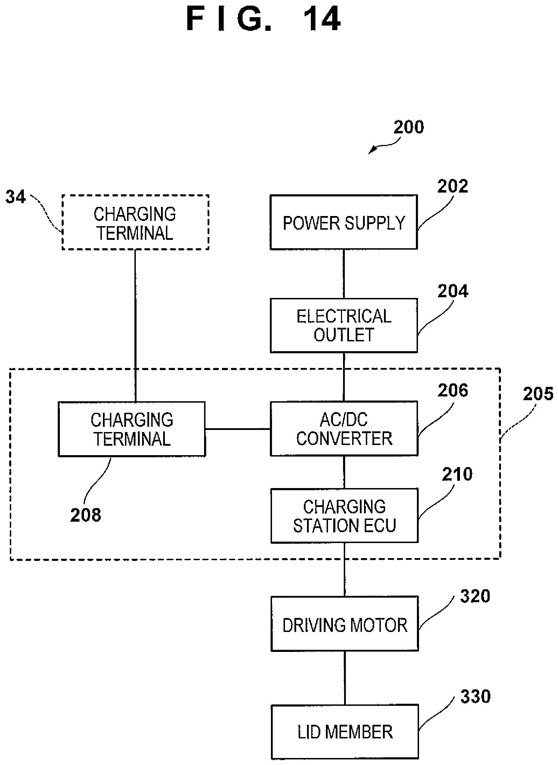

Fig. 14 is a block diagram showing the electrical arrangement of the charging station (ST) 200 according to the third embodiment. As shown in Fig. 14, the charging ST 200 includes the charger 205 connected to a power supply 202 via an electrical outlet 204.

When the work vehicle 10 returns to the charging position connected to a charger 205 (charging terminal 208) of the charging ST 200, the charging terminal 208 of the charging ST 200 is connected to a charging terminal 34 of the work vehicle 10. An AC/DC converter 206 performs the conversion operation based on control of a charging station ECU 210.

Upon detecting the conversion operation by the AC/DC converter 206, the charging station ECU 210 controls driving of a driving motor 320 to close the lid member 330. When the lid member 330 is set in a closed state, the work vehicle 10 cannot be moved backward. In a state in which the charging terminal 34 of the work vehicle 10 is in contact with the charging terminal 208 of the charging station 200, the work vehicle 10 cannot be moved in the right-and-left direction. Since the upper portion of the work vehicle 10 is covered with the cover member 300, the work vehicle 10 cannot be moved vertically, either. That is, the movement of the work vehicle 10 is restricted in the front-and-rear direction, the vertical direction, and the right-and-left direction. The work vehicle 10 is locked on the charging ST 200.

To release locking of the lid member 330, the lid member 330 must be set in an open state. Until the next work schedule execution start timing or the correct authentication information (PIN code) is input, the charging station ECU 210 maintains the locked state by the lid member 330. For example, if the input of the correct authentication information (PIN code) via the external communication device such as a smartphone is confirmed, the charging station ECU 210 controls driving of the driving motor 320 to open the lid member 330, thereby releasing the locked state. According to this embodiment, the anti-theft function can be improved by the physical locking between the work vehicle 10 and the charging ST 200. That is, the autonomous work vehicle can be locked to the charging station for anti-theft performance.

### Fourth Embodiment

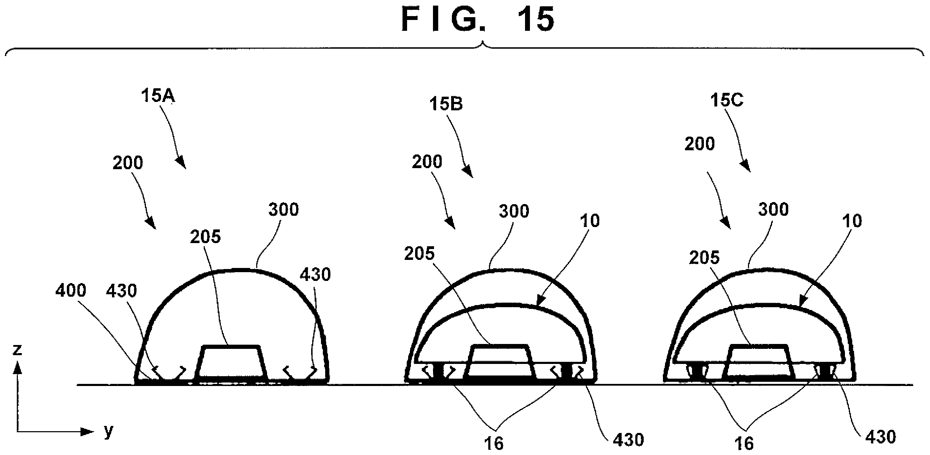

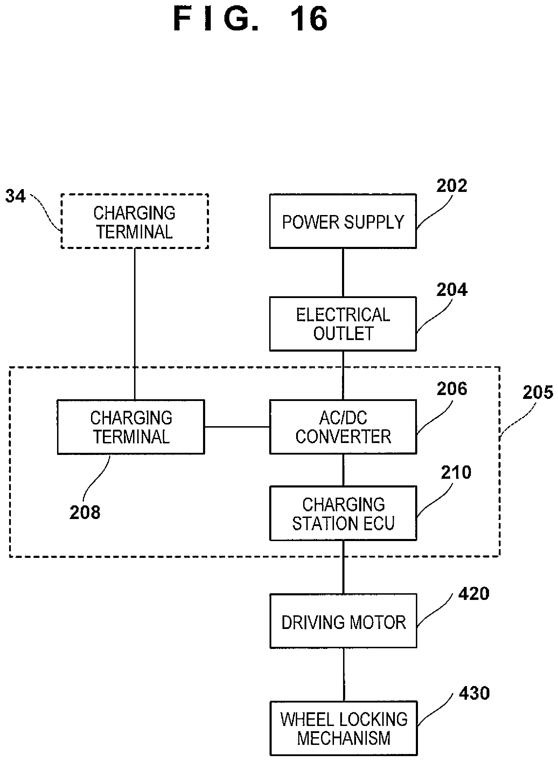

The arrangement of the fourth embodiment of the present invention will now be described with reference to Figs. 15 and 16. In this embodiment, as the arrangement of a locking portion, an arrangement in which a charging station 200 includes a wheel locking mechanism 430 for locking the wheels of a work vehicle 10 in a state in which the work vehicle 10 is located at the charging position will be described below.

Fig. 15 shows views for explaining the wheel locking mechanism 430 provided on a base surface 400 of the charging ST 200. 15A of Fig. 15 indicates the schematic arrangement of the charging ST 200 when viewed from the y-z plane. 15B and 15C of Fig. 15 are schematic views showing a state in which the work vehicle 10 has returned to the charging position of the charging ST 200. The internal arrangements of a blade 20 and the work vehicle 10 are not illustrated for descriptive convenience. Referring to Fig. 15, a cover member 300 is arranged to cover the upper portion and the right and left side portions of the work vehicle 10. The arrangement of the lid member is not illustrated to readily understand the description.

Fig. 16 is a block diagram showing the electrical arrangement of the charging station (ST) 200 according to the fourth embodiment. The charging ST 200 includes a charger 205 connected to a power supply 202 via an electrical outlet 204.

When the work vehicle 10 returns to the charging position connected to the charger 205 (charging terminal 208) of the charging station 200, the charging terminal 208 of the charging ST 200 is connected to a charging terminal 34 of the work vehicle 10. An AC/DC converter 206 starts the conversion operation based on control of a charging station ECU 210.

Upon detecting the start of the conversion operation by the AC/DC converter 206, the charging station ECU 210 controls driving of a driving motor 420 so as to lock the wheels (rear wheels 16) of the work vehicle 10 by the wheel locking mechanism 430.

As shown in Fig. 15, the charging ST 200 of this embodiment includes a wheel locking mechanism 430 on the base surface 400 of the charging ST 200 to lock the wheels (rear wheels 16) of the work vehicle 10. The wheel locking mechanism 430 is formed from two pawl members openable by the driving motor 420. When the pawl members are closed, the wheels (rear wheels 16) of the work vehicle 10 are locked. When the pawl members are opened, the locking is released.

For example, one pawl member can perform the opening/closing operation in one direction based on rotation and driving of the driving motor 420. The other pawl member can perform the opening/closing operation by reversing the rotational direction of the driving motor 420 via, for example, gears. For example, when one pawl member performs the closing operation in the clockwise direction, the other pawl member performs the closing operation in the counterclockwise direction, thereby locking the wheels (rear wheels 16). Similarly, for example, when one pawl member performs the opening operation in the counterclockwise direction, the other pawl member performs the opening operation in the clockwise direction, thereby releasing locking of the wheels (rear wheels 16).

Note that the opening/closing operation of the wheel locking mechanism 430 is not limited to the above example. For example, the two pawl members may be opened/closed using the biasing force of an elastic member such as a spring, or various mechanisms for transmitting the rotation of a motor may be used.

In 15B of Fig. 15, the wheel locking mechanism 430 is set in an open state, and the wheels (rear wheels 16) of the work vehicle 10 are not locked. In 15C of Fig. 15, the wheel locking mechanism 430 is set in a closed state, and the wheels (rear wheels 16) of the work vehicle 10 are kept locked.

Note that Fig. 15 exemplifies the arrangement for locking the rear wheels 16 of the work vehicle 10. However, front wheels 14 of the work vehicle 10 may be locked by the wheel locking mechanism 430 to restrict the movement of the work vehicle 10 in the front-and-rear direction, the vertical direction, and the right-and-left direction. Accordingly, the work vehicle 10 is locked to the charging ST 200.

To release locking by the wheel locking mechanism 430, the wheel locking mechanism 430 must be set in an open state. Until the next work schedule execution start timing or the correct authentication information (PIN code) is input, the charging station ECU 210 maintains the locked state by the wheel locking mechanism 430. If the input of the correct authentication information (PIN code) is confirmed, the charging station ECU 210 controls driving of a driving motor 320 to set the wheel locking mechanism 430 in an open state, thereby releasing the locked state. According to this embodiment, the anti-theft function can be improved by the physical locking between the work vehicle 10 and the charging ST 200. That is, the autonomous work vehicle can be locked to the charging station for anti-theft performance.

### Fifth Embodiment

The processing sequence of an ECU 44 for releasing locking and a charging station ECU 210 when the autonomous work vehicle is locked to the charging station for anti-theft performance will be described below.

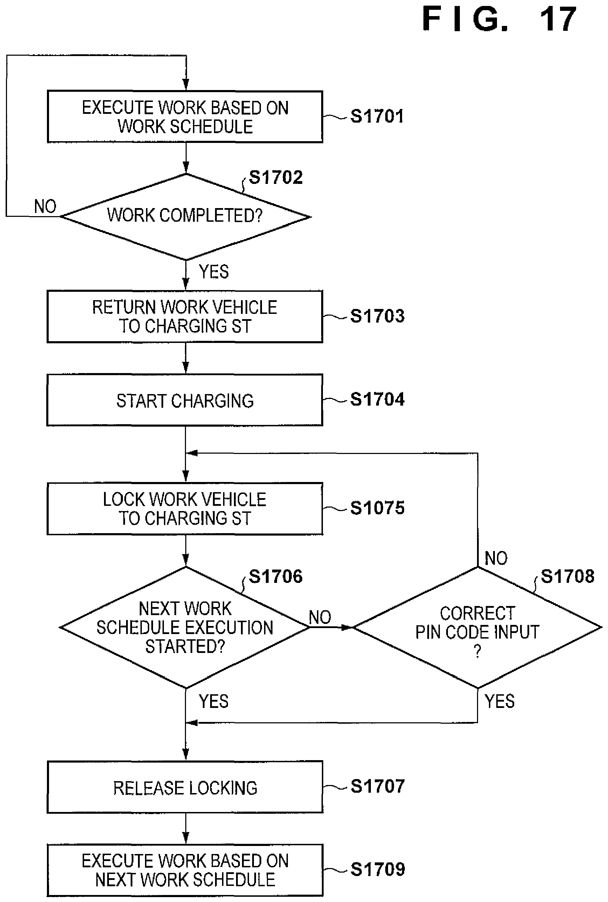

Fig. 17 is a flowchart for explaining the processing sequence of the ECU 44 and the charging station ECU 210.

In step S1701, a work vehicle 10 executes the work based on the work schedule preset by the user. In step S1702, the ECU 44 of the work vehicle 10 determines whether all the scheduled works are complete. If all the scheduled works are not complete (NO in step S1702), the process returns to step S1701 to continue the work.

On the other hand, if it is determined whether all the scheduled works are complete (YES in step S1702), the ECU 44 controls the movement of the work vehicle 10 to return the work vehicle 10 to a charging ST 200 in step S1703.

In step S1704, if the work vehicle 10 returns to the charging ST 200 and a charging terminal 34 of the work vehicle 10 is connected to a charging terminal 208 of the charging station 200, the charging station 200 starts charging.

In step S1705, the ECU 44 or the charging station ECU 210 locks the autonomous work vehicle to the charging station for anti-theft performance by the locking operation described with reference to the first to fourth embodiments while charging of the work vehicle is started in step S1704.

In step S1706, if the ECU 44 or the charging station ECU 210 manages the next work schedule execution start timing stored in the internal memory, and the next work schedule execution start timing is set (YES in step S1706), the ECU 44 or the charging station ECU 210 releases locking in step S1707.

On the other hand, if the next work schedule execution start timing is not set (NO in step S1706), the process advances to step S1708. In step S1708, the ECU 44 or the charging station ECU 210 determines whether the correct authentication information (PIN code) is input.

If it is determined in step S1708 that the correct authentication information (PIN code) is not input (NO in step S1708), the process returns to step S1705. The ECU 44 or the charging station ECU 210 continues the locked state for anti-theft performance.

On the other hand, if it is determined in step S1708 that the correct authentication information (PIN code) is input (YES in step S1708), the process advances to step S1707. The ECU 44 or the charging station ECU 210 releases the locked state.

In step S1709, the work vehicle 10 executes the work based on the next work schedule preset by the user.

According to this embodiment, the locked state can be released or continued based on the start of the preset work vehicle work schedule execution or the input of the correct authentication information (PIN code) while the autonomous work vehicle is locked to the charging station for anti-theft performance.

### Summary of Embodiments

Arrangement 1. A lawn ground management system of the above embodiments is a lawn ground management system including an autonomous work vehicle (for example, 10) configured to perform a mowing operation by a work unit (for example, 20, 22, 64, 100) while autonomously traveling in a work area, and a charging station (for example, 200) configured to perform power supply to the autonomous work vehicle, comprising:
   locking means (for example, 220, 75, 230, 300, 330, 430) for locking the autonomous work vehicle to the charging station for anti-theft performance in a state in which the autonomous work vehicle is located at a charging position to receive the power supply.
Arrangement 2. In the lawn ground management system (for example, 10, 200) of the above embodiments, the work unit includes a mowing blade (for example, 20), and the charging station (for example, 200) includes a locking member (for example, 220) configured to lock the blade.
Arrangement 3. In the lawn ground management system (for example, 10, 200) of the above embodiments, the locking member (for example, 220) includes two portions having a first member interval (for example, W1) capable of passing the blade when the autonomous work vehicle returns from the work area to the charging station and a second member interval (for example, W2) incapable of passing the blade in a state in which the autonomous work vehicle is located at the charging position.
Arrangement 4. In the lawn ground management system (for example, 10, 200) of the above embodiments, the autonomous work vehicle (for example, 10) includes:
   detection means (for example, 64) for detecting a height of the blade with respect to a ground surface;
   adjustment means (for example, 100, 101) for adjusting the height of the blade; and
   control means (for example, 44) for controlling the height of the blade by the adjustment means based on a detection result of the detection means,
   wherein the control means
   controls the blade to a first height (for example, h1) in the locking member when the blade passes between the members arranged at the first member interval, and
   controls the adjustment means so as to make the blade come close to the members arranged at the second member interval to move the blade (for example, 20) upward to a second height (for example, h2) higher than the first height in a state in which the autonomous work vehicle is located at the charging position, thereby locking the blade (for example, 20) to the locking member (for example, 220).
Arrangement 5. In the lawn ground management system (for example, 10, 200) of the above embodiments, the control means (for example, 44) moves the blade downward from the second height to the first height to release locking of the locking member (for example, 220) based on an input of correct authentication information.
Arrangement 6. In the lawn ground management system (for example, 10, 200) of the above embodiments, the control means (for example, 44) moves the blade downward from the second height to the first height to release locking of the locking member (for example, 220) based on a work schedule execution start timing.
Arrangement 7. In the lawn ground management system (for example, 10, 200) of the above embodiments, the locking means includes:
   a locking pin (for example, 75) provided at a front end portion of the autonomous work vehicle; and
   a locking pin holding member (for example, 230) provided in the charging station and configured to hold the locking pin in a state in which the autonomous work vehicle is located at the charging position.
Arrangement 8. In the lawn ground management system (for example, 10, 200) of the above embodiments, the charging station (for example, 200) includes:
   a cover member (for example, 300) serving as the locking means and configured to cover at least an upper portion of the autonomous work vehicle in a state in which the autonomous work vehicle is located at the charging position; and
   a lid member (for example, 330) provided rotatable with respect to the cover member and configured to cover a rear portion of the autonomous work vehicle.
Arrangement 9. In the lawn ground management system (for example, 10, 200) of the above embodiments, the charging station (for example, 200) includes a vehicle wheel locking mechanism (for example, 430) serving as the locking means and configured to lock a vehicle wheel of the autonomous work vehicle in a state in which the autonomous work vehicle is located at the charging position.
Arrangement 10. In the lawn ground management system (for example, 10, 200) of the above embodiments, the charging station (for example, 200) is fixed to a ground surface by an earth screw.

According to the lawn ground management systems of arrangements 1 to 10, the autonomous work vehicle can be locked to the charging station for anti-theft performance. According to the lawn ground management systems of arrangements 5 and 6, the locked state can be released or continued based on the start of the preset work vehicle work schedule execution or the input of the correct authentication information (PIN code) while the autonomous work vehicle is locked to the charging station for anti-theft performance.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A lawn ground management system including
an autonomous work vehicle (10) configured to perform a mowing operation by a work unit while autonomously traveling in a work area,
wherein the work unit includes a mowing blade (20),
a charging station (200) configured to perform power supply to the autonomous work vehicle, and
a locking means (220, 75, 230, 300, 330, 430) for locking the autonomous work vehicle to the charging station (200) for anti-theft performance in a state in which the autonomous work vehicle (10) is located at a charging position to receive the power supply, and
**characterized in**
**that** the charging station (200) includes a locking member (220) configured to lock the blade (20).

2. The system according to claim 1, wherein
the locking member (220) includes two portions having
a first member interval (W1) capable of passing the blade (20) when the autonomous work vehicle (10) returns from the work area to the charging station (200) and
a second member interval (W2) incapable of passing the blade (20) in a state in which the autonomous work vehicle (10) is located at the charging position.

3. The system according to claim 2, wherein
the autonomous work vehicle (10) includes:
detection means (64) for detecting a height of the blade (20) with respect to a ground surface;
adjustment means (100, 101) for adjusting the height of the blade (20); and
control means (44) for controlling the height of the blade (20) by the adjustment means (100, 101) based on a detection result of the detection means (64),
wherein the control means (44)
controls the blade (20) to a first height (h1) in the locking member (220) when the blade (20) passes between the members arranged at the first member interval (W1), and
controls the adjustment means (100, 101) so as to make the blade (20) come close to the members arranged at the second member interval (W2) to move the blade (20) upward to a second height (h2) higher than the first height in a state in which the autonomous work vehicle (10) is located at the charging position, thereby locking the blade (20) to the locking member (220).

4. The system according to claim 3, wherein
the control means (44) moves the blade (20) downward from the second height (h2) to the first height (h1) to release locking of the locking member (220) based on an input of correct authentication information.

5. The system according to claim 4, wherein
the control means (44) moves the blade (20) downward from the second height (h2) to the first height (h1) to release locking of the locking member (220) based on a work schedule execution start timing.

6. The system according to any one of claims 1 to 5, wherein
the locking means includes:
a locking pin (75) provided at a front end portion of the autonomous work vehicle (10); and
a locking pin holding member (230) provided in the charging station (200) and configured to hold the locking pin in a state in which the autonomous work vehicle (20) is located at the charging position.

7. The system according to any one of claims 1 to 6, wherein
the charging station (200) includes:
a cover member (300) serving as the locking means and configured to cover at least an upper portion of the autonomous work vehicle (20) in a state in which the autonomous work vehicle (20) is located at the charging position; and
a lid member (330) provided rotatable with respect to the cover member (300) and configured to cover a rear portion of the autonomous work vehicle (20).

8. The system according to any one of claims 1 to 7, wherein
the charging station (200) includes a vehicle wheel locking mechanism (430) serving as the locking means and configured to lock a vehicle wheel of the autonomous work vehicle (20) in a state in which the autonomous work vehicle (20) is located at the charging position.

9. The system according to any one of claims 1 to 8, wherein
the charging station (200) is fixed to a ground surface by an earth screw to which an earth terminal connected to an earth cable is connected.

## Patentansprüche

1. Ein Rasenboden-Managementsystem einschließlich
eines autonomen Arbeitsfahrzeugs (10), das so konfiguriert ist, dass es einen Mähvorgang durch eine Arbeitseinheit ausführt, während es sich autonom in einem Arbeitsbereich bewegt,
wobei die Arbeitseinheit ein Mähmesser (20) umfasst,
einer Ladestation (200), die so konfiguriert ist, dass sie die Energieversorgung für das autonome Arbeitsfahrzeug übernimmt, und
einer Verriegelungseinrichtung (220, 75, 230, 300, 330, 430) zum Verriegeln des autonomen Arbeitsfahrzeugs an der Ladestation (200) zur Diebstahlsicherung in einem Zustand, in dem sich das autonome Arbeitsfahrzeug (10) in einer Ladeposition zur Aufnahme der Energieversorgung befindet, und
**gekennzeichnet durch**
dass die Ladestation (200) ein Verriegelungselement (220) enthält, das so konfiguriert ist, dass es das Messer (20) verriegelt.

2. System nach Anspruch 1, wobei
das Verriegelungselement (220) zwei Teile mit
einem ersten Elementabstand (W₁) umfasst, der in der Lage ist, die Klinge (20) zu passieren, wenn das autonome Arbeitsfahrzeug (10) vom Arbeitsbereich zur Ladestation (200) zurückkehrt, und
einem zweiten Elementabstand (W2), der nicht in der Lage ist, das Messer (20) in einem Zustand zu passieren, in dem sich das autonome Arbeitsfahrzeug (10) in der Ladeposition befindet.

3. System nach Anspruch 2, wobei
das autonome Arbeitsfahrzeug (10) umfasst:
Erfassungsmittel (64) zum Erfassen einer Höhe des Messers (20) in Bezug auf eine Bodenoberfläche;
Einstellmittel (100, 101) zum Einstellen der Höhe des Messers (20); und
Steuermittel (44) zum Steuern der Höhe des Messers (20) durch die Einstellmittel (100, 101) auf der Grundlage eines Erfassungsergebnisses der Erfassungsmittel (64),
wobei die Steuermittel (44)
die Klinge (20) auf eine erste Höhe (h1) in dem Verriegelungselement (220) steuert, wenn die Klinge (20) zwischen den im ersten Elementabstand (W₁) angeordneten Elementen hindurchgeht, und
die Einstellmittel (100, 101) so steuert, dass das Messer (20) nahe an die im Abstand (W2) des zweiten Elements angeordneten Elemente herangeführt wird, um das Messer (20) in einem Zustand, in dem sich das autonome Arbeitsfahrzeug (10) in der Ladeposition befindet, auf eine zweite Höhe (h2), die höher als die erste Höhe ist, nach oben zu bewegen und dadurch das Messer (20) am Verriegelungselement (220) zu verriegeln.

4. System nach Anspruch 3, wobei
die Steuereinrichtung (44) das Messer (20) von der zweiten Höhe (h2) auf die erste Höhe (h1) nach unten bewegt, um die Verriegelung des Verriegelungselements (220) auf der Grundlage einer Eingabe korrekter Authentifizierungsinformationen aufzuheben.

5. System nach Anspruch 4, wobei
das Steuermittel (44) das Messer (20) von der zweiten Höhe (h2) auf die erste Höhe (h1) nach unten bewegt, um die Verriegelung des Verriegelungselements (220) auf der Grundlage eines Zeitpunkts des Beginns der Arbeitsplanausführung aufzuheben.

6. System nach einem der Ansprüche 1 bis 5, wobei
die das Sperrmittel beinhaltet:
einen Verriegelungsstift (75), der an einem vorderen Endabschnitt des autonomen Arbeitsfahrzeugs (10) vorgesehen ist; und
ein Verriegelungsstift-Halteelement (230), das in der Ladestation (200) vorgesehen und so konfiguriert ist, dass es den Verriegelungsstift in einem Zustand hält, in dem sich das autonome Arbeitsfahrzeug (20) in der Ladeposition befindet.

7. System nach einem der Ansprüche 1 bis 6, wobei
die Ladestation (200) umfasst:
ein Abdeckelement (300), das als Verriegelungsmittel dient und so konfiguriert ist, dass es mindestens einen oberen Teil des autonomen Arbeitsfahrzeugs (20) in einem Zustand abdeckt, in dem sich das autonome Arbeitsfahrzeug (20) in der Ladeposition befindet; und
ein Deckelelement (330), das in Bezug auf das Deckelelement (300) drehbar vorgesehen und so konfiguriert ist, dass es einen hinteren Abschnitt des autonomen Arbeitsfahrzeugs (20) abdeckt.

8. System nach einem der Ansprüche 1 bis 7, wobei
die Ladestation (200) einen Fahrzeugradverriegelungsmechanismus (430) umfasst, der als Verriegelungsmittel dient und so konfiguriert ist, dass er ein Fahrzeugrad des autonomen Arbeitsfahrzeugs (20) in einem Zustand verriegelt, in dem sich das autonome Arbeitsfahrzeug (20) in der Ladeposition befindet.

9. System nach einem der Ansprüche 1 bis 8, wobei
die Ladestation (200) mit einer Erdungsschraube an einer Erdungsfläche befestigt ist, an die eine mit einem Erdungskabel verbundene Erdungsklemme angeschlossen ist.

## Revendications

1. Système de gestion de terrain de pelouse comprenant
un véhicule de travail autonome (10) configuré pour effectuer une opération de tonte par une unité de travail tout en se déplaçant de manière autonome dans une zone de travail,
dans lequel l'unité de travail comprend une lame de tonte (20),
une station de charge (200) configurée pour effectuer une alimentation électrique du véhicule de travail autonome, et
un moyen de blocage (220, 75, 230, 300, 330, 430) pour bloquer le véhicule de travail autonome sur la station de charge (200) pour des performances antivol dans un état dans lequel le véhicule de travail autonome (10) est situé au niveau d'une position de charge pour recevoir l'alimentation électrique, et
**caractérisé en**
**ce que** la station de charge (200) comprend un élément de blocage (220) configuré pour bloquer la lame (20).

2. Système selon la revendication 1, dans lequel
l'élément de blocage (220) comprend deux parties ayant
un premier intervalle d'élément (W1) capable de laisser passer la lame (20) lorsque le véhicule de travail autonome (10) retourne de la zone de travail à la station de charge (200) et
un deuxième intervalle d'élément (W2) incapable de laisser passer la lame (20) dans un état dans lequel le véhicule de travail autonome (10) est situé au niveau de la position de charge.

3. Système selon la revendication 2, dans lequel
le véhicule de travail autonome (10) comprend :
des moyens de détection (64) pour détecter une hauteur de la lame (20) par rapport à une surface de terrain ;
des moyens d'ajustement (100, 101) pour ajuster la hauteur de la lame (20) ; et
un moyen de commande (44) pour commander la hauteur de la lame (20) par les moyens d'ajustement (100, 101) sur la base d'un résultat de détection des moyens de détection (64),
dans lequel le moyen de commande (44)
commande la lame (20) jusqu'à une première hauteur (h1) dans l'élément de blocage (220) lorsque la lame (20) passe entre les éléments agencés au niveau du premier intervalle d'élément (W1), et
commande les moyens d'ajustement (100, 101) de façon à amener la lame (20) à s'approcher des éléments agencés au niveau du deuxième intervalle d'élément (W2) pour bouger la lame (20) vers le haut jusqu'à une deuxième hauteur (h2) plus élevée que la première hauteur dans un état dans lequel le véhicule de travail autonome (10) est situé au niveau de la position de charge, bloquant ainsi la lame (20) sur l'élément de blocage (220).

4. Système selon la revendication 3, dans lequel
le moyen de commande (44) bouge la lame (20) vers le bas à partir de la deuxième hauteur (h2) jusqu'à la première hauteur (h1) pour libérer un blocage de l'élément de blocage (220) sur la base d'une entrée d'informations d'authentification correctes.

5. Système selon la revendication 4, dans lequel
le moyen de commande (44) bouge la lame (20) vers le bas à partir de la deuxième hauteur (h2) jusqu'à la première hauteur (h1) pour libérer un blocage de l'élément de blocage (220) sur la base d'un moment de début d'exécution de programme de travail.

6. Système selon l'une quelconque des revendications 1 à 5, dans lequel
le moyen de blocage comprend :
une goupille de blocage (75) prévue au niveau d'une partie extrémité avant du véhicule de travail autonome (10) ; et
un élément de retenue de goupille de blocage (230) prévu dans la station de charge (200) et configuré pour retenir la goupille de blocage dans un état dans lequel le véhicule de travail autonome (20) est situé au niveau de la position de charge.

7. Système selon l'une quelconque des revendications 1 à 6, dans lequel
la station de charge (200) comprend :
un élément cache (300) servant de moyen de blocage et configuré pour recouvrir au moins une partie supérieure du véhicule de travail autonome (20) dans un état dans lequel le véhicule de travail autonome (20) est situé au niveau de la position de charge ; et
un élément couvercle (330) prévu rotatif par rapport à l'élément cache (300) et configuré pour recouvrir une partie arrière du véhicule de travail autonome (20).

8. Système selon l'une quelconque des revendications 1 à 7, dans lequel
la station de charge (200) comprend un mécanisme de blocage de roue de véhicule (430) servant de moyen de blocage et configuré pour bloquer une roue de véhicule du véhicule de travail autonome (20) dans un état dans lequel le véhicule de travail autonome (20) est situé au niveau de la position de charge.

9. Système selon l'une quelconque des revendications 1 à 8, dans lequel
la station de charge (200) est fixée à une surface de terrain par une vis de terre à laquelle une borne de terre reliée à un câble de terre est reliée.
